# EUROPEAN PATENT SPECIFICATION

(11) **EP 1 524 347 B1**
(45) Date of publication and mention of the grant of the patent: **17.12.2008**
(21) Application number: 04022681.3
(22) Date of filing: 23.09.2004
(51) Int. Cl.: D04B 9/36, D04B 9/06, D04B 15/94, D04B 15/32, D04B 15/60

(54) **Circular type knitting machine for intarsia fabrics**
Rundstrickmaschine für Intarsien-Gestrickstücke
Métier à tricoter circulaire pour la fabrication de tricot intarsia

(30) Priority: 15.10.2003 KR 2003071956; 15.10.2003 KR 2003071957; 15.10.2003 KR 2003071958; 15.10.2003 KR 2003071959
(43) Date of publication of application: 20.04.2005
(73) Proprietor: MBI Technology Co., Ltd., Seocho-gu, Seoul, 137-070 (KR)
(72) Inventor: Kim, Kil Su, Seongnam-si Gyeonggi-do, 463-060 (KR)
(74) Representative: Hoarton, Lloyd Douglas Charles

(56) References cited:
- WO-A-97/07271
- GB-A- 533 879
- GB-A- 959 279
- GB-A- 1 559 675
- KR-B1- 0 174 802
- US-A- 4 193 274
- US-A- 5 186 027

## Description

### BACKGROUND OF THE INVENTION

### Field of the Invention

The present invention relates generally to circular type knitting machines, and more particularly, to a circular flat knitting machine for intarsia fabrics, which can stably knit a rib part of an object while firmly holding knitting yarns cut from the object and, continuously, knit a body part of the object with an intarsia pattern through repeated processes, and which adjusts a gauge of knitting texture of the object while knitting the object with the intarsia pattern design , thus selectively producing objects with loose or close fabrics.

### Description of the Related Art

Generally, flat knitting machines are kinds of machine to knit objects such as sweaters. The flat knitting machines each include two needle plates that are perpendicular to each other to form a convex shape. Each needle plate has a plurality of knitting needles that are arranged at regular intervals. The conventional flat knitting machine may use one of the needle plates for knitting an intarsia pattern or may simultaneously use both needle plates for knitting a jacquard pattern.

GB-A-959 279 discloses a circular type knitting machine for producing knitted fabrics of intarsia design.

A circular type knitting machine for intarsia, in which a needle plate is provided on a knitting needle cylinder to reversibly rotate, was proposed in Korean Patent Registration No. 0174802. The features of this circular type knitting machine of No. 0174802 are as follows.

First, the circular type knitting machine of No. 0174802 includes a knitting needle cylinder which serves as a needle seat to place a plurality of knitting needles thereon. The appropriate number of yarn feeders can be provided according to the diameter of the needle cylinder. Therefore, the circular type knitting machine of No. 0174802 provides diversity of an object's color, which is necessary for intarsia knitting.

Second, in the circular type knitting machine of No. 0174802, the needle selectors, which are arranged to each of the yarn feeders, select the needles on the needle cylinder to feed the object color yarn on the patterns, thus providing colorful intarsia knitting with regular or irregular patterns. Therefore, the circular type knitting machine can knit objects of various patterns.

Third, the circular type knitting machine of No. 0174802 has a mechanism in which a plurality of cam units and the plurality of knitting yarn holding units are provided on an outer surface of the knitting needle cylinder, and the knitting needle cylinder reversibly rotates. As such, because the circular type knitting machine has a simple structure, its manufacturing cost is reduced. In addition, the circular type knitting machine is convenient in maintenance, thereby having practical use. Furthermore, the circular type knitting machine of No. 0174802 reduces moment of inertia in the rotation of the knitting needle cylinder, thus securing precise intarsia knitting, and enhancing productivity of the circular type knitting machine.

Fourth, in the circular type knitting machine of No. 0174802, a plurality of stitch cams is provided on both ends of each of the cam units which are provided on the outer surface of the knitting needle cylinder. In the case of a standard knitting needle gauge 8, a user can adjust the gauge of the knitting needle cylinder from 7 gauge to 9 gauge by controlling the stitch cams. Thus, the circular type knitting machine of No. 0174802 can knit objects with various gauges without exchanging the knitting needle cylinder for a new one, thus providing general-purpose usefulness.

However, the circular type knitting machine of No. 0174802 does not have a means which continuously knits a body part of an object with an intarsia pattern after knitting a rib part of the object. Therefore, the circular type knitting machine independently knits the body part and the rib part and, thereafter, executes an additional process of coupling the rib part to a lower end of the body part. As a result, the circular type knitting machine of No. 0174802 increases personnel expenses, and reduces work efficiency and productivity.

In the meantime, to control each stitch cam, the level of the stitch cam is adjusted by a adjusting screw in a vertical guide groove of a cam support cover. Thereafter, the stitch cam is fastened to the cam support cover having a guide piece by a locking screw. As such, the process of adjusting the stitch cam is very inconvenient and inaccurate. That is, because the stitch cam adjusting process must be executed manually, only skilled users can control the circular type knitting machine.

A knitting yarn separating device was proposed in Korean Patent Laid-open Publication No. 2001-0105531. The conventional knitting yarn separating device is provided in a circular type knitting machine. To knit a colorful object such as a sweater, the knitting yarn separating device allows the circular type knitting machine to select desired knitting yarns and knit rib and body parts of the object through repeated processes.

In the conventional knitting yarn separating device, while a drive plate moves backwards, rotating edges of both a holding unit and a cutting unit, which are provided on a front end of the drive plate, are rotated by a pushing motion of a pushing unit. At this time, a knitting yarn is held by the rotating edge of the holding unit prior to being cut by the rotating edge of the cutting unit. Thereafter, the knitting yarn separating device allows the circular type knitting machine to knit the body part of the object through intarsia knitting continuously with coupling the rib part to the lower end of the body part.

However, in the conventional knitting yarn separating device, whenever the drive plate moves backwards, the rotating edge of the holding unit intermittently is rotated only downwards by the pushing unit. Accordingly, the knitting yarn, held by the holding unit, sometimes gets jammed between the drive plate and the holding unit. By the jamming of the knitting yarn, defective knitting may occur. In addition, use of the knitted product may be impossible.

### SUMMARY OF THE INVENTION

Accordingly, the present invention has been made keeping in mind the above problems occurring in the prior art, and an object of the present invention is to provide a circular type knitting machine which has a knitting yarn gathering device to gather a plurality of knitting yarns, which are held by clamp units of a plurality of knitting yarn separating devices circumferentially arranged over a knitting needle cylinder, and to pull down the plurality of knitting yarns to a center of the knitting needle cylinder, so that the knitting yarns, which have been separated for knitting a rib part of an object, such as a sweater, are rearranged into a state suitable for intarsia knitting, thus automating the intarsia knitting of the rib part and body part of the object.

Another object of the present invention is to provide a circular type knitting machine in which a rib knitting needle plate moves downwards to be selectively coupled to the knitting needle cylinder, and thereafter, the rib knitting needle plate can rotate relative to the knitting needle cylinder around the center of the knitting needle cylinder within a predetermined angular range, so that a rib part of the object is directly knitted on the knitted body part, thus knitting the rib part with a ratio of 1:1 or 2:1, whereby the knitted rib part is not easily loosened.

A further object of the present invention is to provide a circular type knitting machine which has a stitch cam that vertically moves along with a slider according to the rotation of a screw shaft coupled to an output shaft of a stepping motor, so that the stitch cam is easily controlled by the operation of the stepping motor, and a piece of a body part of the knitted object, such as the sweater, is knitted after a starting position of the stitch cam is monitored and set by an originating sensor, thus mass-producing objects having a constant gauge.

Yet another object of the present invention is to provide a circular type knitting machine, in which a knitting yarn, raised by a knitting yarn holding unit to a position around a clamp unit of an inclined column, is held by the clamp unit prior to being cut by a scissors unit, thus being removed from an object to be knitted, and after the above-mentioned process is executed, the clamp unit is returned to the original position thereof by being reversely rotated, so that the knitting yarn does not get jammed between the inclined column and the clamp unit, thereby a knitting yarn separating device is stably operated, thus precisely knitting the object.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a partial sectional view of a circular type knitting machine for intarsia, according to an embodiment of the present invention;
FIG. 2 is a plan view of the circular type knitting machine of FIG 1, in which a plurality of first knitting yarn separating devices is circumferentially arranged over a knitting needle cylinder;
FIG. 3 is an exploded perspective view of a first knitting yarn separating device of FIG. 2 which is an important part of the circular type knitting machine of the present invention;
FIG. 4 is a perspective view of the assembled first knitting yarn separating device of FIG. 3;
FIG. 5 is a perspective view showing a different side of the first knitting yarn separating device of FIG. 4;
FIG. 6A through 6C are perspective views showing the operation of the first knitting yarn separating device of FIG. 3;
FIGS. 7A and 7B are perspective views of a knitting yarn gathering device which is another important part of the circular type knitting machine of the present invention;
FIG. 7C is a side view of the knitting yarn gathering device of FIG. 7A;
FIGS. 8A and 8B are perspective views showing the operation of the knitting yarn gathering device of FIG. 7A in conjunction with the first knitting yarn separating device of FIG. 3;
FIG. 9 is a perspective view of a rib knitting needle plate coupling unit which is a further important part of the circular type knitting machine of the present invention;
FIG. 10 is a front view showing a coupling of the rib knitting needle plate coupling unit of FIG. 9 to the rib knitting needle plate;
FIG. 11A is a sectional view taken along the line A-A of FIG. 9;
FIG. 11B is a sectional view taken along the line B-B of FIG. 9;
FIG. 12 is a perspective view showing a coupling of a stitch cam control unit, which is yet another important part of the circular type knitting machine of the present invention, to a cam support cover;
FIG. 13A is a perspective view of the stitch cam control unit of FIG. 12;
FIG. 13B is a perspective view showing another side of the stitch cam control unit of FIG. 13A;
FIG. 13C is a side view of the stitch cam control unit of FIG. 13A; and
FIG. 13D is a sectional view taken along the line C-C of FIG. 13A.

### DESCRIPTION OF THE PREFERRED EMBODIMENTS

Hereinafter, a circular type knitting machine for intarsia according to a preferred embodiment of the present invention will be described in detail with reference to the attached drawings.

Reference now should be made to the drawings, in which the same reference numerals are used throughout the different drawings to designate the same or similar components.

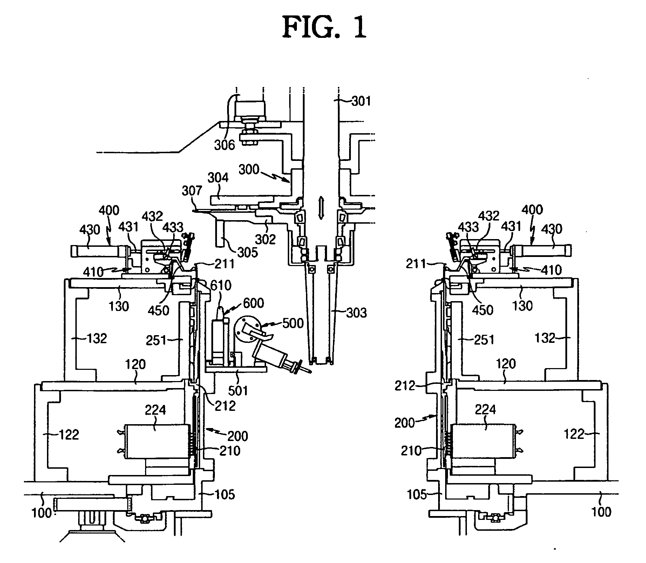

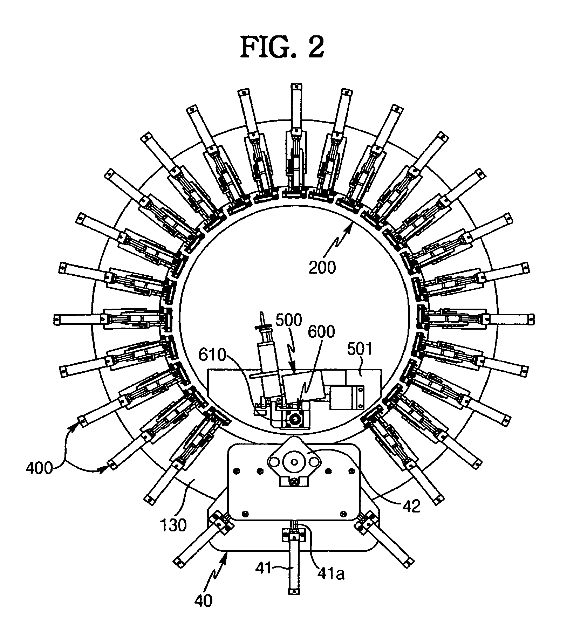

FIG. 1 is a partial sectional view of the circular type knitting machine having a plurality of first knitting yarn separating devices 400, according to the preferred embodiment of the present invention. FIG. 2 is a plan view of the circular type knitting machine of FIG. 1, in which the plurality of first knitting yarn separating devices 400 is circumferentially arranged over a knitting needle cylinder 200.

As shown in FIGS. 1 and 2, the circular type knitting machine of the present invention includes a cylinder support 105 which is provided on an annular base 100 to be rotated by a reversible driver (not shown). The circular type knitting machine further includes the knitting needle cylinder 200 which is coupled at a lower end thereof to an upper part of the cylinder support 105 to rotate along with the cylinder support 105. A plurality of needle grooves 210 is longitudinally arranged around an outer surface of the knitting needle cylinder 200 to be spaced apart from each other at regular intervals. A knitting needle 211 and a jack 212 are inserted in each of the plurality of needle grooves 210.

The circular type knitting machine further includes a rib knitting needle plate drive unit 300 which is provided over the knitting needle cylinder 200 to knit a rib part of an object such as a sweater by being operated in conjunction with the knitting needle cylinder 200. The rib knitting needle plate drive unit 300 includes a central shaft 301 which is vertically operated by a pneumatic linear cylinder 306 along a central axis of the knitting needle cylinder 200. The rib knitting needle plate drive unit 300 further includes a rib knitting needle plate 302 and a free rotating shaft 303 which are rotatably provided on a lower portion of central shaft 301. The knitting needle plate drive unit 300 further includes a cam holding disk 304 which has a plurality of cams to actuate a plurality of knitting needles 307 which is circumferentially arranged on an upper surface of the rib knitting needle plate 302. A coupling cap 305 with a coupling space is provided at a predetermined position under a lower surface of the rib knitting needle plate 302.

The circular type knitting machine further includes a needle selecting control unit 224 which is provided on the annular base 100 around the knitting needle cylinder 200 to actuate the jacks 212 inserted in the needle grooves 210 of the knitting needle cylinder 200. That is, at the request of a needle selecting controller, the needle selecting control unit 224 pushes a butt of the selected jack 212 which is inserted in a needle grooves 210 of the knitting needle cylinder 200.

In detail, the needle selecting controller reads information of a pattern of an object to be knitted. Thereafter, the needle selecting controller controls the needle selecting control unit 224 such that a selected knitting needle 211 take a desired knitting yarn, which passes through a yarn feeding hole 451 of a knitting yarn holding unit 450, using information resulting from detecting a knitting needle sensing protrusion of a sensing disk.

The circular type knitting machine further includes a first annular support plate 120 which is provided on the annular base 100 and surrounds the outer surface of the knitting needle cylinder 200 while being supported by a plurality of first supports 122. The circular type knitting machine further includes a second annular support plate 130 which is provided on the first annular support plate 120 and surrounds an upper portion of the outer surface of the knitting needle cylinder 200 while being supported by a plurality of second supports 132.

The circular type knitting machine further includes a plurality of cam support covers 251 which is provided on the first annular support plate 120 to surround the outer surface of the knitting needle cylinder 200. Cams are provided on an inner surface of each of the cam support covers 251 to form a cam unit. The cam unit includes a cam mechanism including a descending cam, a protrusion cam, an ascending cam and a jack cam. The cam mechanism is provided on the inner surface of each of the cam support covers 251 constituting the cam units. Each of the cam units corresponds to each of first and second knitting yarn separating devices 400 and 40.

The number of cam support covers 251 is appropriately provided according to a diameter and a condition of the knitting needle cylinder 200. The cam support covers 251 do not perfectly surround the outer surface of the knitting needle cylinder 200. A subsidiary cam support cover (not shown) having a predetermined width is coupled between two cam support covers 251 to allow the knitting needles 211 to be inspected or to allow an old or broken knitting needle 211 to be replaced with a new one. The subsidiary cam support cover and the cam support covers 251 perfectly surround the outer surface of the knitting needle cylinder 200.

In detail, each of first and last cam support covers 251, which are coupled to each other through the subsidiary cam support cover, includes a stitch cam 255. Each stitch cam 255 vertically moves on each of the first and last cam support covers 251 according to a stitch cam control unit 700.

The first and second knitting yarn separating devices 400 and 40 are circumferentially arranged on the second annular support plate 130. The second knitting yarn separating device 40 is directed toward a center of the knitting needle cylinder 200 and used for knitting the rib part of the object such as a sweater. About twenty three knitting yarn separating devices 400 are circumferentially arranged at regular intervals for knitting a body part of the object while being placed at positions adjacent to the second knitting yarn separating devices 40.

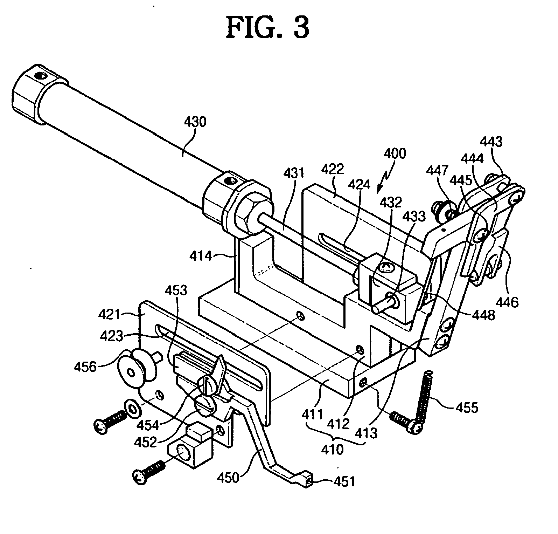

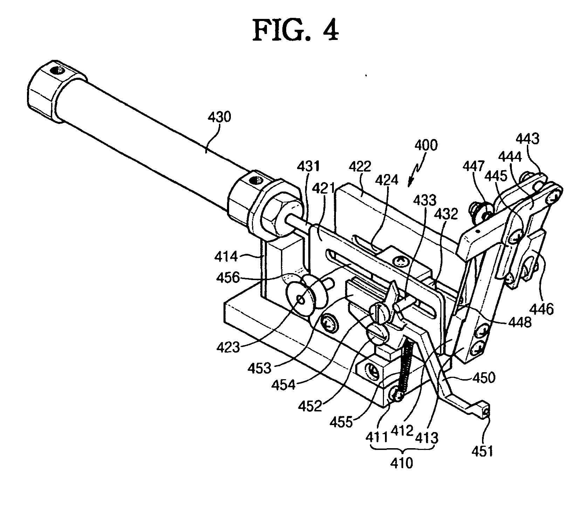

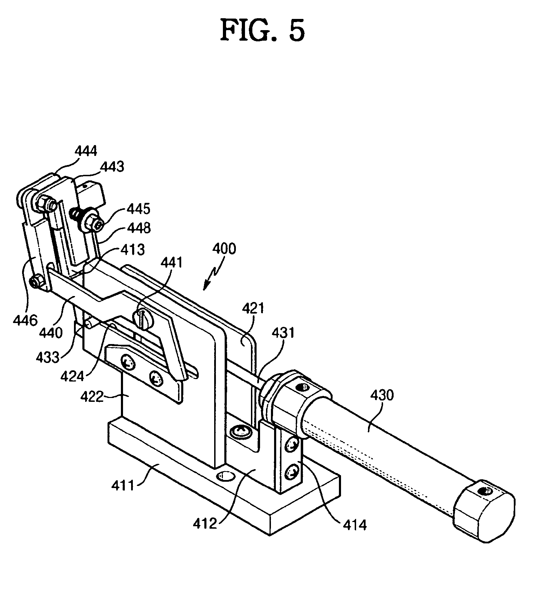

FIGS. 3 through 6 are views showing the construction of the first knitting yarn separating device 400 of the circular type knitting machine of the present invention.

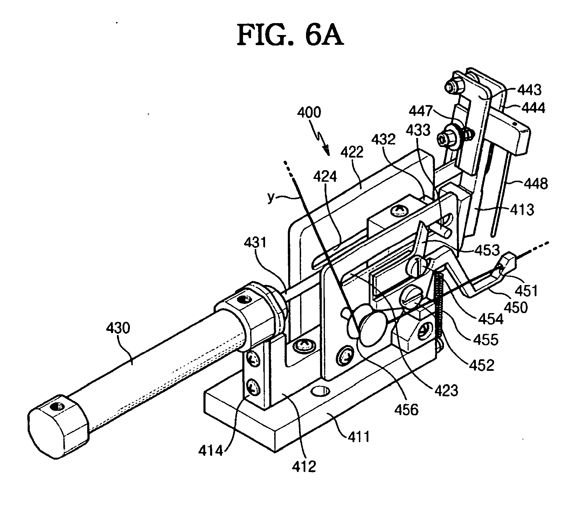

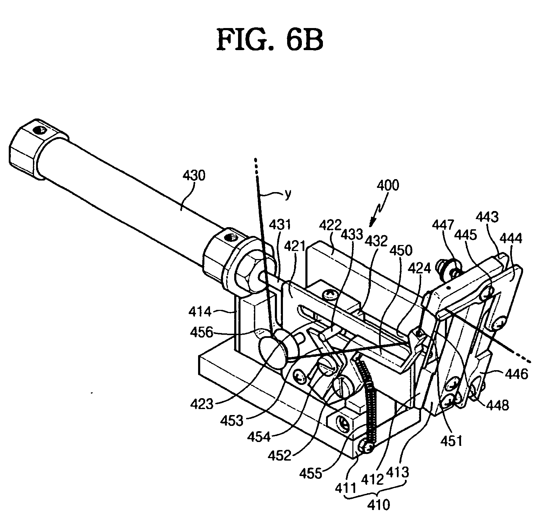

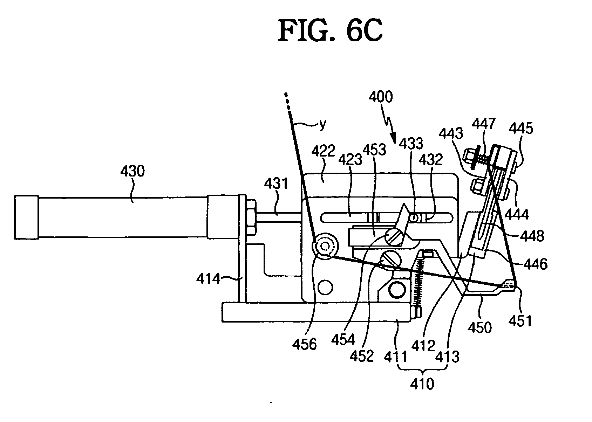

Referring to FIGS. 3 and 6, each of the first knitting yarn separating devices 400 includes a main body 410. The main body 410 has a horizontal plate 411, and a vertical unit 412 which is provided on the horizontal plate 411. An inclined column 413 is provided on a front end of the vertical unit 412. The main body 410 further includes first and second side units 421 and 422 which are provided on both sides of the vertical unit 412. First and second slots 423 and 424 are longitudinally formed on each of the first and second side units 412 and 422, respectively.

The first knitting yarn separating device 400 further includes a pneumatic cylinder 430 which has a piston rod 431 and is coupled to a rear end of the vertical unit 412 of the main body 410 by a bracket 414. A slider 432 is movably coupled to an end of the piston rod 431 of the cylinder 430. An actuating pin 433 protrudes outwards on both sidewalls of the slider 432 to be inserted into the first and second slots 423 and 424 of the first and second side units 421 and 422.

The first knitting yarn separating device 400 further includes a swing rod 440 which is provided on the second side unit 422 over the second slot 424 of the second side unit 422. The swing rod 440 is swung upwards and downwards around a first support pin 441, provided on the second side unit 422, by the actuating pin 433 of the slider 432 which moves horizontally along the first and second slots 423 and 424 of the first and second side units 421 and 422.

The first knitting yarn separating device 400 further includes a clamp unit 443 and a scissors unit 444 which are rotatably provided on the inclined column 413 of the vertical unit 412. The clamp unit 443 and the scissors unit 444 are coupled to an end of the swing rod 440 by a connecting unit 446. Therefore, the clamp unit 443 and the scissors unit 444 rotate together around a second support pin 445 according to the rotation of the swing rod 440.

A compression spring 447 is provided on the clamp unit 443. Due to the compression spring 447, the clamp unit 443 is in elastic contact with the inclined column 413 to stably hold a knitting yarn. A guide rod 448 extends downwards from an upper part of the inclined column 413. Thus, when the knitting yarn holding unit 450 rotates upwards, the guide rod 448 precisely guides the knitting yarn.

The knitting yarn holding unit 450 is provided at a lower position on an outer surface of a front part of the first side unit 421 to rotate around a third support pin 452 provided on the first side unit 421. The yarn feeding hole 451 is provided on an end of the knitting yarn holding unit 450. An L-shaped trigger 453 is rotatably mounted on a rear portion of the knitting yarn holding unit 450 by a fourth support pin 454 provided on the knitting yarn holding unit 450. The L-shaped trigger 453 rotates forwards and backwards by the actuating pin 433 of the slider 432 which moves horizontally along the first and second slots 423 and 424 of the first and second side units 421 and 422. In a detailed description, when the actuating pin 433 moves forwards along the first and second slots 423 and 424, the L-shaped trigger 453 rotates clockwise by the actuating pin 433 which pushes the L-shaped trigger 453 forwards. After the actuating pin 433 passes forwards over the L-shaped trigger 453, the L-shaped trigger 453, which has rotated clockwise, rotates counterclockwise due to its gravity to be returned to its original position. On the other hand, when the actuating pin 433, which has been placed in front portions of the first and second slots 423 and 424 of the first and second side units 421 and 422, moves backwards along the first and second slots 423 and 424, the L-shaped trigger 453 rotates counterclockwise by the actuating pin 433 which pushes the L-shaped trigger 453 backwards.

As such, when the L-shaped trigger 453 rotates counterclockwise by the actuating pin 433 of the slider 432, the L-shaped trigger 453 pushes the rear end of the knitting yarn holding unit 450 downwards. Then, the front end of the knitting yarn holding unit 450 is raised upwards. In the meantime, a tension spring 455 is coupled to the knitting yarn holding unit 450 to elastically return the knitting yarn holding unit 450 from a counterclockwise rotated position to the original position thereof.

The first knitting yarn separating device 400 further includes a guide roller 456 which is provided at a lower position on a rear end of the first side unit 421 to guide a knitting yarn (y) from a knitting yarn feeding unit to the yarn feeding hole 451 of the knitting yarn holding unit 450.

In the meantime, the circular type knitting machine of the present invention further includes a knitting yarn gathering device 500 which is provided on the base 501 inside the knitting needle cylinder 200. The knitting yarn gathering device 500 gathers a plurality of knitting yarns from the first knitting yarn separating devices 400 which are circumferentially arranged on the second annular support plate 130. Thereafter, the knitting yarn gathering device 500 pulls down the plurality of knitting yarns toward the center of the knitting needle cylinder 200 for intarsia knitting. The circular type knitting machine further includes a knitting needle plate coupling unit 600 which is provided on the base 501. The rib knitting needle plate coupling unit 600 has a coupling protrusion 610 which is movable and is removably coupled to the coupling cap 305 of the knitting needle plate 302. Thus, the rib knitting needle plate coupling unit 600 controls the coupling of the knitting needle plate 302 to the rib knitting needle cylinder 200 and the rotation of the rib knitting needle plate 302 relative to the knitting needle cylinder 200.

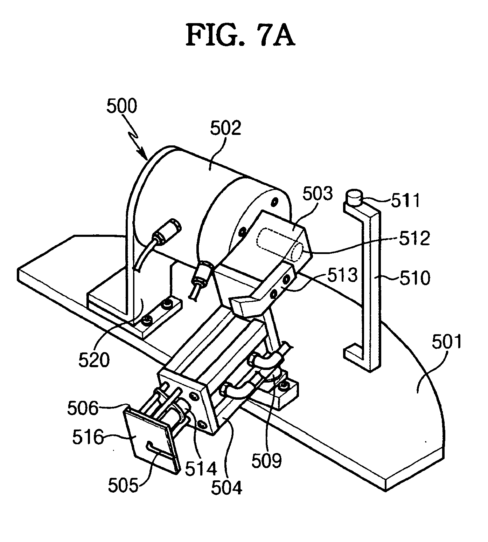

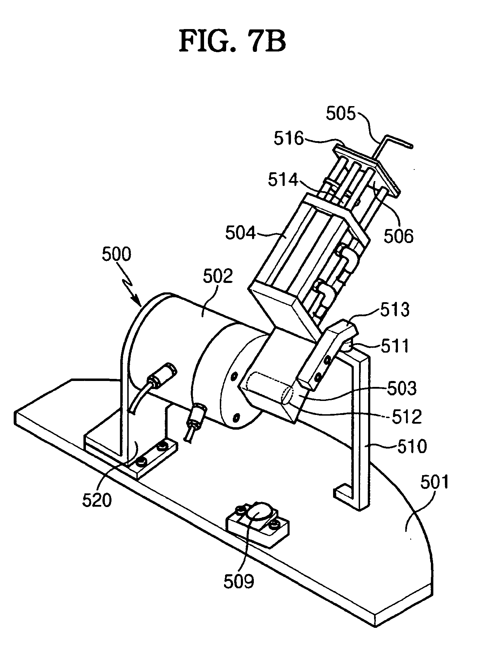

FIG. 7A through 7C are views showing the construction of the knitting yarn-gathering device 500 of the circular type knitting machine of the present invention.

As shown in FIGS. 7A through 7C, the knitting yarn-gathering device 500 includes a pneumatic rotating cylinder 502 that is supported on the base 501, provided inside the knitting needle cylinder 200, by a bracket 520. The knitting yarn-gathering device 500 further includes a pneumatic linear cylinder 504 that is mounted to a rotating bracket 503 that is coupled to a first end of a rotating shaft 512 of the pneumatic rotating cylinder 502.

The knitting yarn-gathering device 500 further includes a knitting yarn-gathering lever 505 that is provided on an end of a piston rod 514, coupled to the pneumatic linear cylinder 504. The knitting yarn-gathering lever 505 is bent at an end thereof to form an L-shape. The knitting yarn gathering device 500 further includes a knitting yarn grip plate 506 which is coupled to an end of the pneumatic linear cylinder 504, so that, when the piston rod 514 retracts, the bent end of the knitting yarn gathering lever 505 comes into close contact with the knitting yarn grip plate 506. A rubber pad 516 is provided on an outer surface of the knitting yarn grip plate 506, so as to markedly hold the knitting yarn without slippage of the knitting yarn while the bent end of the knitting yarn-gathering lever 505 is in close contact with the knitting yarn grip plate 506.

The knitting yarn-gathering device 500 further includes a control lever 507, which is coupled to a second end of the rotating shaft 512 of the pneumatic rotating cylinder 502. A limit switch 508 controls the operation of the pneumatic rotating cylinder 502 while being turned on/off by the control lever 507.

To limit a range of the operation of the pneumatic linear cylinder 504, a first stopper 509 is provided at a predetermined position on the base 501. Thus, when the pneumatic linear cylinder 504 rotates downwards at a predetermined height, the first stopper 509 stops the pneumatic linear cylinder 504. A stop protrusion 513 is provided at a side of the rotating bracket 503. Thus, when the pneumatic linear cylinder 504 rotates upwards, the stop protrusion 513 comes into contact with a second stopper 511 provided on an upper end of a post 510 of the base 501.

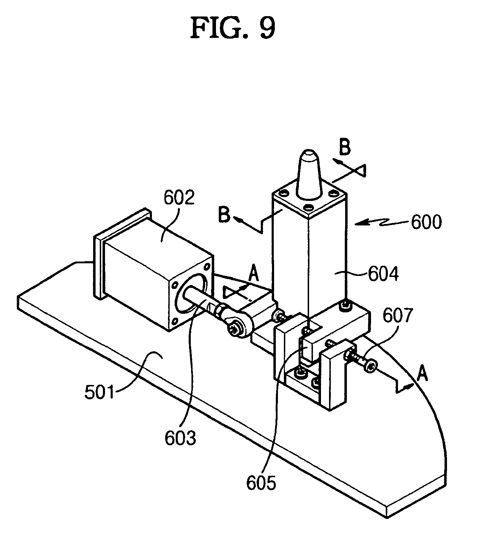

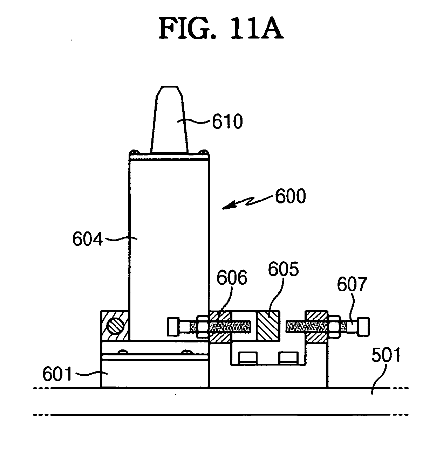

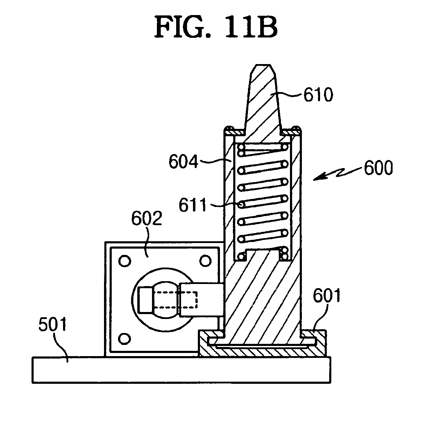

FIGS. 9 through 11B are views showing the construction of the rib knitting needle plate coupling unit 600 of the circular type knitting machine of the present invention.

As shown in FIGS. 9 through 11B, the rib knitting needle plate-coupling unit 600 includes a guide 601, which is provided on a central portion of the base 501 that is provided inside the knitting needle cylinder 200. The rib knitting needle plate-coupling unit 600 further includes a slider 604 that is provided on the guide 601 of the base 501 to horizontally move along the guide 601. An extension 605 is provided on a first surface of the slider 604. The extension 605 is placed between first and second stoppers 606 and 607, which are provided at predetermined positions on the base 501.

The coupling protrusion 610 is perpendicularly provided on an upper end of the slider 604. The coupling protrusion 610 is removably inserted into the coupling cap 305 of the rib knitting needle plate 302 that vertically moves by the pneumatic linear cylinder 306 of the rib knitting needle plate drive unit 300. The coupling protrusion 610 is elastically supported by a compression spring 611.

The first and second stoppers 606 and 607 of the rib knitting needle plate coupling unit 600 limit motion of the slider 604, thus setting a basic position and a traveling distance of the slider 604. The movement of the slider 604 means that the rib knitting needle plate 302 rotates such that the knitting needles 211 of the knitting needle cylinder 200 and the knitting needles 307 of the rib knitting needle plate 302 are crossed in a ratio of 1:1 or 2:1.

The first and second stoppers 606 and 607 of the rib knitting needle plate-coupling unit 600 each comprise a screw to precisely adjust the basic position and the standard position of the slider 604.

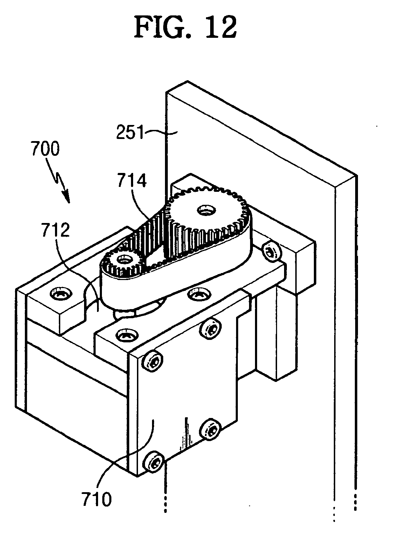

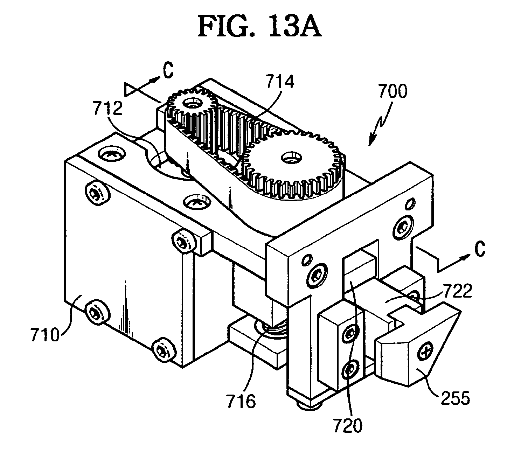

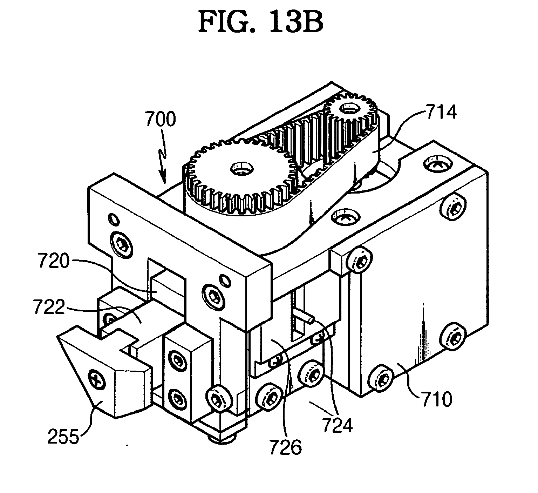

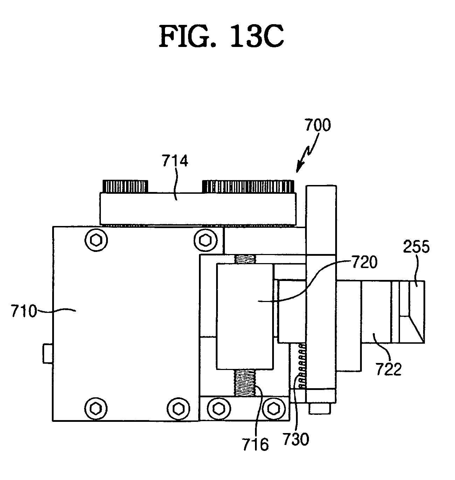

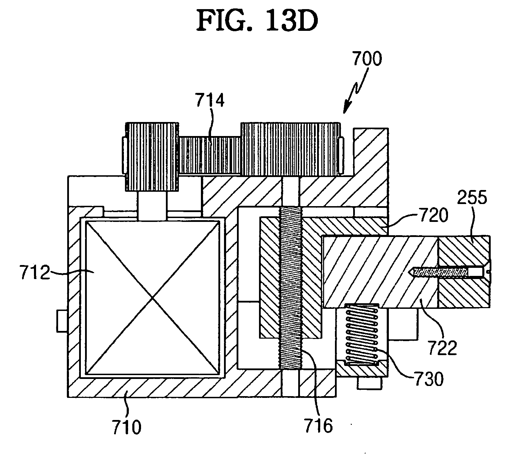

FIGS. 12 through 13D are views showing the construction of the gauge cam control unit 700 of the circular flat knitting machine of the present invention.

As shown in FIGS. 12 through 13D, the stitch cam control unit 700 includes a main body 710 which is provided on an outer surface of each of the cam support covers 251 to vertically actuate each of the stitch cams 255. A stepping motor 712 is vertically provided in the main body 710. A screw shaft 716 is rotatably provided in the main body 710 while being coupled to an output shaft of the stepping motor 712 through a timing belt 714.

The stitch cam control unit 700 further includes a slider 720 which is provided around the screw shaft 716 to axially move along the screw shaft 716 according to a rotating direction of the screw shaft 716. A vertical moving unit 722 engages with the slider 720 to vertically move along with the slider 720 in the main body 710. The stitch cam 255 is provided on an end of the vertical moving unit 722. At this time, the stitch cam 255 protrudes inside the cam support cover 251. A sensing pin 724 is fastened to a side of the slider 720.

The stitch cam control unit 700 further includes an originating sensor 726 which is mounted to the main body 710 around the slider 720. The originating sensor 726 senses the sensing pin 724 of the slider 720 to set the original position of the slider 720 and to allow the slider 720 to be controlled for a predetermined gauge.

The stitch cam control unit 700 further includes a compression spring 730 which is provided between the main body 710 and the vertical moving unit 722. Thus, the vertical moving unit 722 is biased by the compression spring 730 upwards, while an upper end of the vertical moving unit 722 is supported by the slider 720. In the drawings, the vertical moving unit 722, which separately engages with the slider 720, is shown and explained. However, the vertical moving unit 722 may be integrally coupled to the slider 720.

The operation of the circular type knitting machine of the present invention will be described herein below.

In the state of FIG. 1, knitting yarns (y) are fed from the knitting yarn feeding unit (not shown) to both of the first knitting yarn separating devices 400 for knitting a body part of an object, such as a sweater, and the second knitting yarn separating device 40 for knitting a rib part of the object. The first and second knitting yarn separating devices 400 and 40 are provided on the second annular support plate 130 above the kitting needle cylinder 200. At this time, each of the knitting yarns (y) passes through the yarn feeding hole 451 of the knitting yarn holding unit 450 of each of the first knitting yarn separating devices 400 after being supported by the guide roller 456 of the first side unit 421 of the first knitting yarn separating device 400. Furthermore, an end of the knitting yarn (y) is held by the clamp unit 443 of the inclined column 413. At this time, the piston rod 431 of the pneumatic cylinder 430 of the first knitting yarn separating device 400 is maintained in a state of being retracted. The slider 432, which is coupled to the front end of the piston rod 431, is also maintained in a state of being retracted. The yarn feeding hole 451 of the front end of the knitting yarn holding unit 450 is placed at a lower position of the first knitting yarn separating device 400.

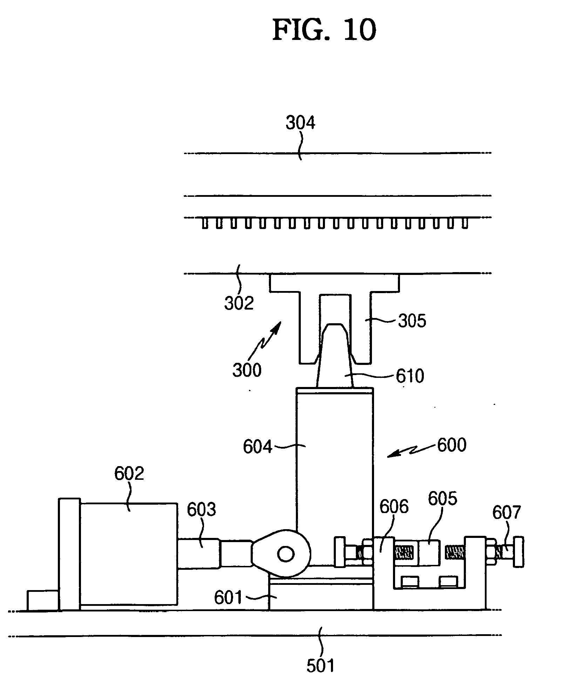

In the above state, the rib knitting needle plate 302 of the rib knitting needle plate drive unit 300 moves downwards along with central shaft 301 by the pneumatic linear cylinder 306. By the descent of the rib knitting needle plate 302, the coupling protrusion 610 of the rib knitting needle plate coupling unit 600 is inserted into the coupling cap 305 which is provided under the lower surface of the rib knitting needle plate 302 (see, FIG. 10). Thus, the rib knitting needle plate 302 is coupled to the knitting needle cylinder 200.

Furthermore, a piston rod 41 a of a pneumatic horizontal cylinder 41, which is provided on the second knitting yarn separating device 40 for knitting the rib part of the object, moves toward the center of the knitting needle cylinder 200. Thereafter, the rib part of the object is knitted using the knitting yarn (y) fed from the knitting yarn separating device 40 while the rib knitting needle plate 302 and the knitting needle cylinder 200 rotate together around the center of the knitting needle cylinder 200.

Both the knitting needle cylinder 200 and the rib knitting needle plate 302 reciprocate along with the cylinder support 105, which is provided under the knitting needle cylinder 200, by the reversible driver within a predetermined angular range. During the above-mentioned reciprocation of the knitting needle cylinder 200, both the knitting needle 211 and the jack 212, which are inserted in each of the plurality of needle grooves 210, also reciprocatedly rotate along with the knitting needle cylinder 200 within the predetermined angular range. In addition, while the knitting needle cylinder 200 repeats the reciprocation, selected knitting needles 211 vertically move due to the needle selecting control unit 224. Thus, the rib part of the object is knitted from the knitting yarn (y) fed from the second knitting yarn separating device 40.

As such, after the knitting of the rib part of the object is completed using the knitting yarn (y) fed from the second knitting yarn separating device 40, both the pneumatic horizontal cylinder 41 and a pneumatic vertical cylinder 42 of the second knitting yarn separating device 40 are immediately operated. That is, by the operation of the pneumatic vertical cylinder 42, a piston rod of the pneumatic vertical cylinder 42 moves upwards. Thus, the knitting yarn (y), which is held by the second knitting yarn separating device 40, is cut and removed from the second knitting yarn separating device 40. Thereafter, the rib knitting needle plate 302 moves upwards and returns to the original position thereof. -

During the rib knitting, all the first knitting yarn separating devices 400 are maintained in waiting states, as shown in FIG 6c. That is, the ends of the knitting yarn (y) are held by the clamp units 443 of the first knitting yarn separating devices 400. In addition, the yarn feeding holes 451 of the knitting yarn holding unit 450 are placed at the lower positions thereof by the tension springs 455.

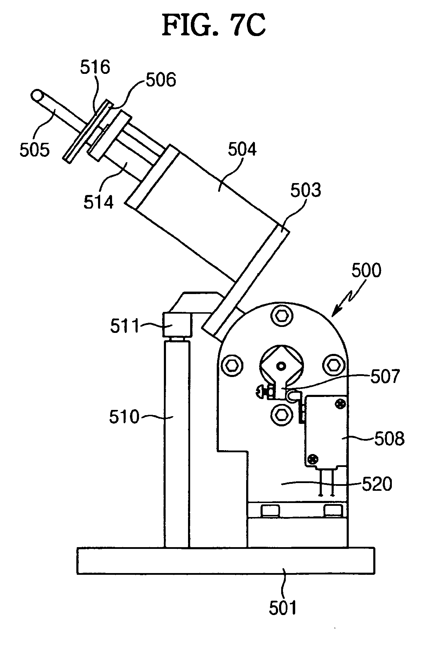

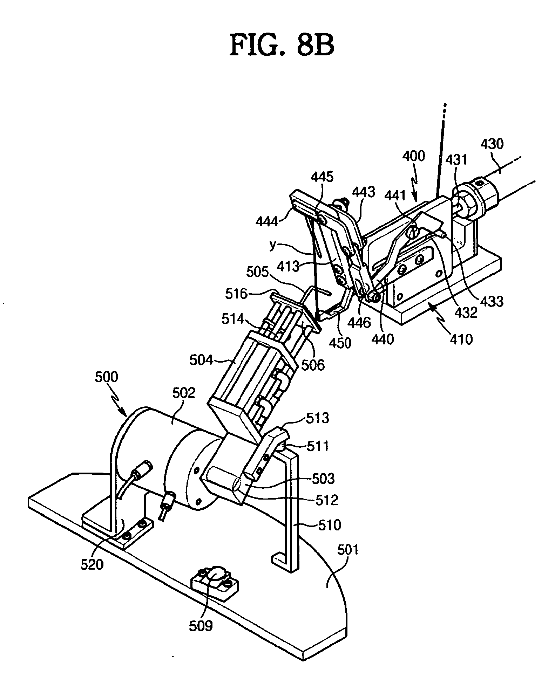

After the knitting plate 302 is returned to the original position thereof, the pneumatic rotating cylinder 502 of the knitting yarn gathering device 500, which is provided inside the knitting needle cylinder 200, is actuated. Thus, the pneumatic linear cylinder 504, which is coupled to the first end of the rotating shaft of the rotating cylinder 502 by the rotating bracket 503, rotates upwards, as shown in FIGS. 7C and 8B. Furthermore, the piston rod 514 of the pneumatic linear cylinder 504 of the knitting yarn-gathering device 500 extends. At this time, all the knitting yarn holding units 450 of the first knitting yarn separating devices 400 are maintained at the lower positions thereof. Therefore, the knitting yarn gathering lever 505 of the piston rod 514 of the pneumatic linear cylinder 504 is placed at a position at which knitting yarns (y), held by the clamp units 443 of the first knitting yarn separating devices 400, are hung on a hook part of the knitting yarn gathering lever 505.

In the above state, the knitting yarn gathering device 500 along with the knitting needle cylinder 200 makes one turn around the center of the knitting needle cylinder 200. Then, the knitting yarns (y), which are held by the clamp units 443 of the first knitting yarn separating devices 400, are gathered on the hook part of the knitting yarn gathering lever 505. Thus, the knitting yarns (y), which are extracted from the knitting yarn holding units 450 of the first knitting yarn separating devices 400, are wound around the free rotating shaft 303 which is provided on the lower portion of the central shaft 301 of the rib knitting needle plate drive unit 300.

After the knitting yarns (y) are gathered on the hook part of the knitting yarn gathering lever 505, the pneumatic linear cylinder 504 of the knitting yarn gathering device 500 is operated to retract the piston rod 514 of the pneumatic linear cylinder 504. Then, the hook part of the knitting yarn gathering lever 505 comes into close contact with the rubber pad 516 of the knitting yarn grip plate 506 which is coupled to the end of the pneumatic linear cylinder 504. Thus, the knitting yarns (y), which are hung on the hook part of the knitting yarn gathering lever 505, are firmly held on the knitting yarn gathering device 500.

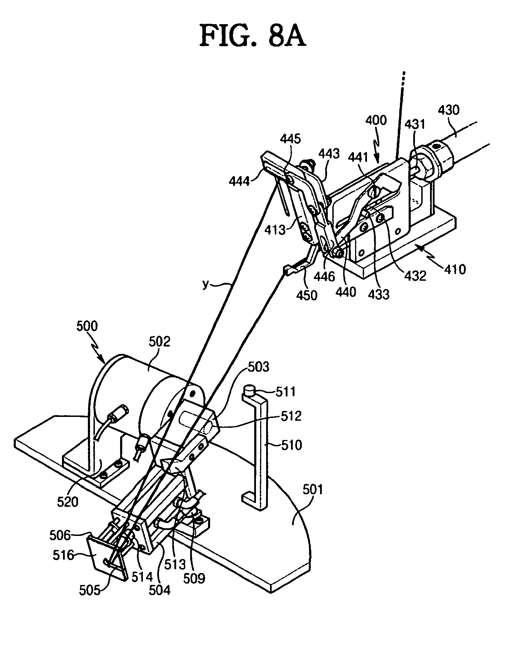

In the above state in which the knitting yarns (y) are held between the knitting yarn grip plate 506 and the knitting yarn gathering lever 505, the pneumatic rotating cylinder 502 of the knitting yarn gathering device 500 is operated to rotate the pneumatic linear cylinder 504 downwards along with the rotating bracket 503 which is coupled to the first end of the rotating shaft of the pneumatic rotating cylinder 502, as shown in FIG. 8A. At this time, the first stopper 509, provided on the base 501, stops the rotation of the pneumatic linear cylinder 504.

When the rotating cylinder 502 rotates the pneumatic linear cylinder 504 downwards, the control lever 507, which is coupled to the second end of the rotating shaft of the pneumatic rotating cylinder 502, turns on the limit switch 508, thus monitoring the operation of the rotating cylinder 502. Furthermore, both the knitting yarn grip plate 506 and the knitting yarn gathering lever 505, which rotate along with the pneumatic linear cylinder 504 downwards, are placed at the center of the knitting needle cylinder 200 under the free rotating shaft 303 of the rib knitting needle plate drive unit 300. Accordingly, the knitting yarns (y) are maintained in a state of being extracted from the first knitting yarn separating devices 400, which are circumferentially arranged on the second annular support plate 130, to the center of the knitting needle cylinder 200 while being held by the clamp units 443 of the first knitting yarn separating devices 400.

For ease of description, each knitting yarn (y) is connected to the clamp unit 443 and the knitting yarn holding unit 450 of each of the first knitting yarn separating devices 400 through the knitting yarn gathering lever 505 of the knitting yarn gathering device 500 which is placed at the center of the knitting needle cylinder 200.

In the above state, the piston rods 431 of the pneumatic cylinders 430 of the first knitting yarn separating devices 400 move forwards. Thus, the swing rods 440 of the first knitting yarn separating devices 400 are rotated upwards by the actuating pins 433 of the sliders 432 of the pneumatic cylinders 430. As a result, the knitting yarns (y) are released from the clamp units 443 of the first knitting yarn separating devices 400. At this time, the knitting yarns (y) are in a state for intarsia knitting. That is, the knitting yarns (y) are gathered at the center of the knitting needle cylinder 200 from the knitting yarn holding unit 450 of the first knitting yarn separating devices 400.

Thereafter, the knitting needle cylinder 200 reciprocatedly rotates by the reversible driver. Then, the knitting needles 211 and the jacks 212, which are inserted in the needle grooves 210 of the knitting needle cylinders 200, also reciprocatedly rotate around the center of the knitting needle cylinder 200 along with the knitting needle cylinder 200 within the predetermined angular range. While the above-mentioned reciprocal rotation is repeated, selected knitting needles 211 weave knitting yarns (y) into a desired pattern for intarsia knitting after taking the knitting yarns (y) from the knitting yarn holding units 450 of selected first knitting yarn separating devices 400.

While the body part of the object is knitted through executing the intarsia knitting, the knitting yarns (y) are connected from the knitting yarn feeding unit to the body part of the object through the knitting yarn holding units 450 of the first knitting yarn separating devices 400.

In the above state, to complete the knitting of the body part of the object and to knit the rubber part of the object, the pneumatic cylinders 430 of the first knitting yarn separating devices 400 are operated. By the operation of each pneumatic cylinder 430, the piston rod 431 of the pneumatic cylinder 430 is retracted. Thus, the actuating pin 433 of the slider 432, provided on the front end of the piston rod 431 of each of the pneumatic cylinders 430, rotates the L-shaped trigger 453 of each of the knitting yarn holding units 450. By the rotation of each L-shaped trigger 453, each knitting yarn holding unit 450 rotates in the same direction as that of the L-shaped trigger 453. Therefore, the yarn feeding hole 451, provided on the front end of each knitting yarn holding unit 450, is placed at the highest position thereof. In addition, each swing rod 440 rotates around the first support pin 441 provided on each second side unit 422. Then, the clamp unit 443 and the scissors unit 444 of each first knitting yarn separating device 400 are pulled downward by the connecting unit 446 during the rotation of the swing rod 440. Thus, the clamp unit 443 and the scissors unit 444 rotate around the second support pin 445 in conjunction with the swing rod 440.

In a detailed description, when the yarn feeding hole 451 of the knitting yarn holding unit 450 rises, and thus, the knitting yarn (y) is close to the upper part of the column 413, the clamp unit and the scissors unit 444 are pulled downwards by the connecting unit 446 which is coupled to the front end of the swing rod 440. As a result, the knitting yarn (y) is held by both the inclined column 413 and the clamp unit 443 prior to being cut by the scissors unit 444. Thus, the knitting yarns (y) are removed from the knitted body part of the object. At this time, the knitting yarns (y), fed from the knitting yarn feeding unit, are maintained in the state of being held by both the inclined column 413 and the clamp unit 443. That is, because the clamp unit 443 holds the knitting yarn (y) before an edge of the scissors unit 444 comes into contact with the knitting yarn (y), the knitting yarn (y) is maintained in the state of being held by both the inclined column 413 and the clamp unit 443.

After the knitting yarn (y) is cut, the actuating pin 433 of the slider 432 is continuously retracted along with the piston rod 431 of the cylinder 430 until the actuating pin 433 of the slider 432 passes through the L-shaped trigger 453 of the knitting yarn holding unit 450. Then, the L-shaped trigger 453 is released from the actuating pin 433, so that the knitting yarn holding unit 450 is returned by the tension spring 455 to the original position thereof.

Thereafter, a rib part knitting process using the second knitting yarn separating device 40 is executed for knitting the rib part of the object, in the same manner as that of the above-mentioned body part knitting process. Such a process is repeated, thus knitting an object such as a sweater.

A user can adjust a gauge of the knitting tissue of the object by offering stitch data through the pattern design while the circular type knitting machine of the present invention repeatedly executes the above-mentioned knitting process. To adjust the gauge of the object, the stepping motor 712 of the stitch cam control unit 700 is operated to actuate the slider 720 until the sensing pin 724 of the slider 720 is sensed by the originating sensor 726. After the motion of the slider 720 is stopped, a sensing position at which the slider 720 is stopped is set as a starting position (gauge '0'). In the above state in which the above-mentioned starting position setting process is completed, the user inputs a desired gauge to the circular flat knitting machine. Then, the stepping motor 712 actuates the stitch cam 255 of the slider 720 to a position corresponding to the input gauge.

To actuate the stitch cam 255 using the stepping motor 712, the stepping motor 712 is operated according to the input value of gauge. The operation of the stepping motor 712 rotates the screw shaft 716 that is coupled to the output shaft of the stepping motor 712 through the timing belt 714. Then, the slider 720 of the stitch cam control unit 700, which is provided around the screw shaft 716, moves upwards or downwards according to the rotating direction of the screw shaft 716. At this time, the originating sensor 726 monitors the sensing unit 724 of the slider 720 to operate the stepping motor 712 until the slider 720 is placed at the position corresponding to the input gauge.

As such, when the slider 720 vertically moves, the vertical moving unit 722, which engages with the slider 720 and has the stitch cam 255, vertically moves along with the slider 720. Thus, the gauge of the object to be knitted is adjusted according to the vertical motion of the stitch cam 255.

At the beginning of the knitting, in the circular type knitting machine, the knitting needle cylinder 200 starts to rotate to search the origin point of degree zero, after sensing the origin point the machine stops and then above mentioned gauge adjusting process begins taking a little time. After gauge controlling process, the knitting begins: Then the knitting needle cylinder 200 reciprocatedly rotates by the reversible driver. Then, the knitting needles 211 and the jacks 212, which are inserted in the needle grooves 210 of the knitting needle cylinders 200, also reciprocatedly rotate along with the knitting needle cylinder 200 within the predetermined angular range. While the above-mentioned reciprocal rotation is repeated, selected knitting needles 211 weave knitting yarns (y) into a desired pattern for intarsia knitting after taking the knitting yarns (y) from the knitting yarn holding units 450 of the selected first knitting yarn separating devices 400.

In intarsia knitting using the circular type knitting machine of the present invention, knitting yarns are woven through existing loops constituting the knitting tissues of the object to form new loops, thus knitting the object. The object, such as the sweater, may have a loose fabrics or a tight fabrics according to the input gauge data from pattern design.

After a piece of the object, such as the sweater, is knitted through the intarsia knitting process, a computer inputs the constant gauge-data to subsequent knitted pieces. Therefore, the circular type knitting machine of the present invention can easily mass-produce knitted objects having a constant gauge.

As described above, the present invention provides a circular type knitting machine which has a knitting yarn gathering device to gather a plurality of knitting yarns, which are held by clamp units of a plurality of knitting yarn separating devices circumferentially arranged over a knitting needle cylinder, and to pull down the plurality of knitting yarns to a center of the knitting needle cylinder, so that the knitting yarns, which have been separated for knitting a rib part of an object, are rearranged into a state for intarsia knitting, thus automating the intarsia knitting the rib part and body part of the object.

Furthermore, in the present invention, a rib knitting needle plate moves downward to be selectively coupled to the knitting needle cylinder. The rib knitting needle plate can rotate relative to the knitting needle cylinder around the center of the knitting needle cylinder within a predetermined angular range. Therefore, a rib part of the object is directly knitted on a knitted body part. In addition, the circular type knitting machine of the present invention can knit the rib part with a ratio of 1:1 or 2:1. Furthermore, the knitted rib part is not easily loosened.

Moreover, the circular type knitting machine of the present invention further has a stitch cam, which vertically moves along with a slider according to a rotation of a screw shaft, coupled to an output shaft of a stepping motor. Therefore, the stitch cam is easily controlled by the operation of the stepping motor. In the circular type knitting machine of the present invention, a piece of a body part of the knitted object, such as a sweater, is knitted after a starting position of the stitch cam is monitored and set by an originating sensor. Thereafter, subsequent objects having a constant gauge are continuously knitted. Accordingly, the circular type knitting machine of the present invention can mass-produce objects having a constant gauge.

In addition, in the circular type knitting machine of the present invention, a knitting yarn, which is raised by a knitting yarn holding unit to a position around a clamp unit of an inclined column, is held by the clamp unit prior to being cut by a scissors unit, thus being removed from an object to be knitted. After a desired process is executed, the clamp unit is returned to the original position thereof by being reversely rotated. Therefore, the knitting yarn does not get jammed between the inclined column and the clamp unit, thereby a knitting yarn separating device is stably operated, thus precisely knitting the object.

## Claims

1. A circular type knitting machine for intarsia, comprising: a knitting needle cylinder (200) rotated by a reversible driver and provided inside a plurality of cam support covers (251) coupled to each other;, a plurality of knitting yarn separating devices (400) circumferentially arranged on an annular support plate (130) provided on an upper portion of the knitting needle cylinder (200); and a cam mechanism comprising various kinds of cams including a stitch cam (255), and provided on each of the plurality of cam support covers (251),
**characterized in that** each of the knitting yarn separating devices (400) comprises:
a main body (410), comprising:
a horizontal plate (411);
a vertical unit (412) provided on the horizontal plate (411), with an inclined column (413) provided on a front end of the vertical unit (412); and
first and second side units (412)(422) provided on both sides of the vertical unit (412), with a slot (423)(424) longitudinally formed on each of the first and second side units (412)(422);
a pneumatic cylinder (430) having a piston rod (431) and coupled to the main body (410) by a bracket (414) provided on a rear end of the vertical unit (412);
a slider (432) movably coupled to an end of the piston rod (431) of the pneumatic cylinder (430), with an actuating pin (433) provided on the slider (432) to be inserted into the slots (423)(424) of the first and second side units (421)(422);
a swing rod (440) provided on the second side unit (422) such that the swing rod (440) is swung forwards and backwards around a first support pin (441), provided on the second side unit (422), by the actuating pin (433) of the slider (432) to move horizontally along the slots (423)(424) of the first and second side units (421)(422);
a clamp unit (443) and a scissors unit (444) rotatably provided on the inclined column (413) of the vertical unit (412) and coupled to an end of the swing rod (440) by means of a connecting unit (446), so that the clamp unit (443) and the scissors unit (444) rotates together around a second support pin (445) according to rotation of the swing rod (440);
a knitting yarn holding unit (450) provided on the first side unit (421) to rotate around a third support pin (452) provided on the first side unit (421), with a tension spring (455) coupled to the knitting yarn holding unit (450), so that, when a front end of the knitting yarn holding unit (450) rotate upward, the tension spring (455) returns the knitting yarn holding unit (450) to an original position thereof; and
an L-shaped trigger (453) rotatably coupled to the knitting yarn holding unit (450) by a fourth support pin (454) provided on a upper portion of a rear end of the knitting yarn holding unit (450), so that, when the actuating pin (433) of the slider (432) moves rearwards along the slots (423)(424) of the first and second side units (421)(422, the L-shaped trigger (453) rotates to raise the front end of the knitting yarn holding unit (450) upwards.

2. The circular type knitting machine according to claim 1, wherein the clamp unit (443) is in elastic contact with the inclined column (413) by compression spring (447) to stably hold a knitting yarn (y), and each of the knitting yarn separating devices (400) further comprises a guide rod (448) extending downward from an upper part of the inclined column (413), so that the guide rod (448) guides the knitting yarn (y) white the knitting yarn holding unit (450) rotates upward.

## Patentansprüche

1. Rundstrickmaschine für Intarsien, umfassend: einen Stricknadelzylinder (200), der durch einen umkehrbaren Antrieb gedreht wird und innen eine Mehrzahl von miteinander verbundenen Nockenhalterdeckeln (251) aufweist; eine Mehrzahl von Strickgarn-Trennvorrichtungen (400), die rund um eine ringförmige Halteplatte (130) angeordnet sind, welche an einem oberen Teil des Stricknadelzylinders (200) angeordnet ist; und einen Nockenmechanismus, der verschiedene Arten von Nocken umfasst, einschließend einen Nadelnocken (255) und an jedem der Mehrzahl von Nockenhalterdeckeln (251) bereitgestellt wird,
**dadurch gekennzeichnet, dass** jede der Strickgarn-Trennvorrichtungen (400) umfasst:
einen Hauptteil (410), umfassend:
eine horizontale Platte (411);
eine vertikale Einheit (412), die auf der horizontalen Platte (411) angeordnet ist, mit einer geneigten Säule (413), die an einem vorderen Ende der vertikalen Einheit (412) angebracht ist; und
eine erste und eine zweite Seiteneinheit (412)(422), die an beiden Seiten der vertikalen Einheit (412) angebracht sind, mit einem Schlitz (423)(424), der in Längsrichtung an der ersten und an der zweiten Seiteneinheit (412)(422) ausgebildet ist;
einen pneumatischen Zylinder (430), der eine Kolbenstange (431) aufweist und mit dem Hauptteil (410) durch eine Klammer (414) verbunden ist, die am hinteren Ende der vertikalen Einheit (412) angebracht ist;
einen Schlitten (432), der beweglich mit einem Ende der Kolbenstange (431) des pneumatischen Zylinders (430) verbunden ist, mit einem Betätigungsstift (433), der auf dem Schlitten (432) angebracht ist und mit den Schlitzen (423)(424) der ersten und der zweiten Seiteneinheit (421)(422) in Eingriff gebracht wird;
eine Schwingstange (440), die an der zweiten Seiteneinheit (422) so angebracht ist, dass die Schwingstange (440) um einen ersten Haltestift (441) an der zweiten Seiteneinheit (422) durch den Betätigungsstift (433) am Schlitten (432) vorwärts und rückwärts schwingend bewegt wird, wenn sich dieser horizontal entlang den Schlitzen (423)(424) der ersten und der zweiten Seiteneinheit (421)(422) bewegt;
eine Klemmeinheit (443) und eine Schereneinheit (444), die drehbar an der geneigten Säule (413) der vertikalen Einheit (412) angebracht und mittels einer Verbindungseinheit (446) mit einem Ende der Schwingstange (440) so verbunden sind, dass sich die Klemmeinheit (443) und die Schereneinheit (444) um einen zweiten Haltestift (445) herum gegeneinander drehen entsprechend der Drehung der Schwingstange (440);
eine Strickgarn-Halteeinheit (450), die an der ersten Seiteneinheit (421) angebracht ist und sich um einen dritten Haltestift (452) dreht, der an der ersten Seiteneinheit (421) angebracht ist, wobei eine Spannfeder (455) mit der Strickgarn-Halteeinheit (450) so verbunden ist, dass, wenn sich ein vorderes Ende der Strickgarn-Halteeinheit (450) aufwärts dreht, die Spannfeder (455) die Strickgarn-Halteeinheit (450) in ihre Ursprungsform zurück bewegt; und
einen L-förmigen Auslöser (453), der durch einen vierten Haltestift (454) am oberen Teil eines hinteren Endes der Strickgarn-Halteeinheit (450) drehbar mit der Strickgarn-Halteeinheit (450) verbunden ist, sodass, wenn sich der Betätigungsstift (433) des Schlittens (432) rückwärts entlang den Schlitzen (423)(424) der ersten und der zweiten Seiteneinheit (421)(422) bewegt, der L-förmige Auslöser (453) derart gedreht wird, dass das vordere Ende der Strickgarn-Halteeinheit (450) nach oben gehoben wird.

2. Rundstrickmaschine nach Anspruch 1, wobei die Klemmeinheit (443) über eine Druckfeder (447) in elastischem Kontakt mit der geneigten Säule (413) steht, um ein Strickgarn (y) stabil zu halten, und jede der Strickgarn-Trennvorrichtungen (400) ferner eine Führungsstange (448) umfasst, die sich von einem oberen Teil der geneigten Säule (413) nach unten erstreckt, sodass die Führungsstange (448) das Strickgarn (y) führt, während sich die Strickgarn-Halteeinheit (450) nach oben dreht.

## Revendications

1. Une machine à tricoter de type circulaire pour l'intarsia, comportant : un cylindre d'aiguille à tricoter (200) mis en rotation par un entraînement réversible et fourni à l'intérieur d'une pluralité de couvercles de support de came (251) couplés les uns aux autres, une pluralité de dispositifs de séparation de fil à tricoter (400) agencés de façon circonférentielle sur une plaque de support annulaire (130) fournie sur une portion supérieure du cylindre d'aiguille à tricoter (200), et un mécanisme de came comportant divers types de cames y compris une came d'abattage (255), et fourni sur chaque couvercle parmi la pluralité de couvercles de support de came (251),
**caractérisée en ce que** chacun des dispositifs de séparation de fil à tricoter (400) comporte :
un corps principal (410), comportant:
une plaque horizontale (411);
une unité verticale (412) fournie sur la plaque horizontale (411), une colonne inclinée (413) étant fournie sur une extrémité avant de l'unité verticale (412) ; et
des première et deuxième unités latérales (412)(422) fournies sur les deux côtés de l'unité verticale (412), avec une fente (423)(424) formée de façon longitudinale sur chacune des première et deuxième unités latérales (412)(422); un cylindre pneumatique (430) ayant une tige de piston (431) et couplé au corps principal (410) par une équerre (414) fournie sur une extrémité arrière de l'unité verticale (412);
un bloc à coulisse (432) couplé de façon amovible à une extrémité de la tige de piston (431) du cylindre pneumatique (430), avec une broche d'actionnement (433) fournie sur le bloc à coulisse (432) devant être insérée dans les fentes (423)(424) des première et deuxième unités latérales (421)(422) ;
une tige oscillante (440) fournie sur la deuxième unité latérale (422) de telle sorte que la tige oscillante (440) oscille vers l'avant et vers l'arrière autour d'une première broche de support (441), fournie sur la deuxième unité latérale (422), sous l'action de la broche d'actionnement (433) du bloc à coulisse (432) pour se déplacer horizontalement suivant les fentes (423)(424) des première et deuxième unités latérales (421)(422);
une unité de serrage (443) et une unité de ciseaux (444) fournies de façon à pouvoir entrer en rotation sur la colonne inclinée (413) de l'unité verticale (412) et couplées à une extrémité de la tige oscillante (440) au moyen d'une unité de raccord (446), de sorte que l'unité de serrage (443) et l'unité de ciseaux (444) entrent en rotation ensemble autour d'une deuxième broche de support (445) selon la rotation de la tige oscillante (440);
une unité de maintien de fil à tricoter (450) fournie sur la première unité latérale (421) pour entrer en rotation autour d'une troisième broche de support (452) fournie sur la première unité latérale (421), un ressort de tension (455) étant couplé à l'unité de maintien de fil à tricoter (450), de sorte que, quand une extrémité avant de l'unité de maintien de fil à tricoter (450) entre en rotation vers le haut, le ressort de tension (455) renvoie l'unité de maintien de fil à tricoter (450) à une position originale de cette dernière ; et
un déclencheur en forme de L (453) couplé de façon à pouvoir entrer en rotation à l'unité de maintien de fil à tricoter (450) par une quatrième broche de support (454) fournie sur une portion supérieure d'une extrémité arrière de l'unité de maintien de fil à tricoter (450), de sorte que, quand la broche d'actionnement (433) du bloc à coulisse (432) se déplace vers l'arrière suivant les fentes (423)(424) des première et deuxième unités latérales (421)(422), le déclencheur en forme de L (453) entre en rotation pour soulever l'extrémité avant de l'unité de maintien de fil à tricoter (450) vers le haut.

2. La machine à tricoter de type circulaire selon la revendication 1, dans laquelle l'unité de serrage (443) est en contact élastique avec la colonne inclinée (413) grâce à un ressort de compression (447) pour maintenir de façon stable un fil à tricoter (y), et chacun des dispositifs de séparation de fil à tricoter (400) comporte de plus une tige-guide (448) s'étendant vers le bas à partir d'une partie supérieure de la colonne inclinée (413), de sorte que la tige-guide (448) guide le fil à tricoter (y) tandis que l'unité de maintien de fil à tricoter (450) entre en rotation vers le haut.
